# EUROPÄISCHE PATENTANMELDUNG

(11) **EP 0 814 588 A1**
(43) Veröffentlichungstag der Anmeldung: **29.12.1997**
(21) Anmeldenummer: 97105761.7
(22) Anmeldetag: 08.04.1997
(51) Int. Cl.: H04L 29/06

(54) **Verfahren zur Bereitstellung von agrarmeteorologischen Informationen**

(30) Priorität: 17.06.1996 DE 19624018
(71) Anmelder: CLAAS KGaA, 33428 Harsewinkel (DE)
(72) Erfinder: Autermann, Ludger, 48327 Drensteinfurt (DE); Böttinger, Stefan, Dr., 33647 Bielefeld (DE); Klasbrummel, Klaudia, 33415 Verl (DE); Kollmeier, Klaus, 48159 Münster (DE); Oetzel, Kai, 33824 Werther (DE); Schligten, Ernst-Josef, 48361 Beelen (DE); Steckel, Thilo, 33428 Harsewinkel 3 (DE); Wippersteg, Hans-Herrmann, 32257 Bünde (DE)

(57) **Zusammenfassung**

Die Erfindung bezieht sich auf ein Verfahren zur Bereitstellung von agrarmeteorologischen Informationen.

Zur Übermittlung von automatisiert weiterverarbeitbaren Daten wird vorgeschlagen, daß sich der Empfänger der agrarmeteorologischen Informationen mit einem Computerterminal unter Verwendung einer Datenübertragungssoftware über an das Computerterminal angeschlossene Telekommunikationsmittel in einen ebenfalls daran angeschlossenen Server einwählt, der Server für den Empfänger bestimmte Dateien oder Daten, die Agrarmeteorologische Informationen enthalten, zur Datenübertragung bereitstellt, die Dateien über Telekommunikationsmittel unter Verwendung einer Datenübertragungssoftware auf das Computerterminal des Empfängers überträgt und diese dann dort für folgende Bearbeitungen zur Verfügung stehen.

## Beschreibung

Die Erfindung bezieht sich auf ein Verfahren zur Bereitstellung eines agrarmeteorologischen Informationsdienstes, wie er in der Landwirtschft genutzt wird.

Aus dem Stand der Technik ist es bekannt, Wetterinformationen für landwirtschaftliche Zwecke über Zeitungen oder telefonische Ansagedienste zu verbreiten. In der Landwirtschaft besteht ein großer Bedarf nach agrarmeteorologischer Beratung, da viele Arbeitsgänge und Applikationen in erheblichem Ausmaß von der Wetterlage abhängen. So ist bei der Düngung und dem Pflanzenschutz die Menge der auszubringenden Dünge- und Pflanzenschutzmittel, die sehr teuer sind, ganz erheblich von den herrschenden Windverhältnissen und der zu erwartenden Auswaschung der applizierten Mittel durch Niederschlag abhängig. Eine möglichst genaue Vorhersage der Wetterverhältnisse, die eine bedarfsgenauere Dosierung der zu applizierenden Mittel erlaubt, hat so einen erheblichen Einfluß auf die Wirtschaftlichkeit der Düngung und der Pflanzenschutzmaßnahmen. Gleichzeitig ergeben sich aus einer bedarfsgerechten Ausbringung auch Vorteile hinsichtlich des Umweltschutzes, da durch die bedarfsgerechte Dosierung nicht mehr Pflanzenschutz- und Düngemittel als nötig ausgebracht werden. Für die Planung von Arbeitsgängen wie beispielsweise dem Mähen von Gras, das anschließend auf der Wiese trocknen, gewendet, geschwadet und zu Ballen verpreßt werden soll, muß möglichst ein Erntefenster gefunden werden, in dem alle Arbeitsgänge ohne Unterbrechung durch Niederschläge erledigt werden können, da sonst die Ertragsmenge und die Ertragsqualität verringert ist. Arbeiten wie das Mähdreschen sind erst ab einem bestimmten Reife- und Trocknungsgrad des Getreides möglich, der abhängt von der zu erwartenden Intensität und Dauer der Sonneneinstrahlung, Verdunstung von Feuchtigkeit aus dem Boden, Luftfeuchtigkeit und Niederschlagsmengen. Auch die Vorhersage, wann sich wieviel Feuchtigkeit aus der Luft bei der abendlichen Abkühlung im stehenden Getreide niederschlägt, ermöglicht eine Prognose, wie lange voraussichtlich am Abend gedroschen werden kann. Aus dieser Erläuterung wird erkennbar, daß von agrarmeteorologischen Informationen betriebswirtschaftliche Entscheidungen in einem landwirtschaftlichen Betrieb abhängen. Neuerdings werden beispielsweise von Bauernverbänden Wetterinformationen per Fax angeboten, die eine umfassendere Information mit einem größeren Datenumfang enthalten als die bisherigen Informationsmedien. Insbesondere erlaubt es das Wetterfax, individualisierte Informationen an Empfänger des Wetterfaxes weiterzugeben, wie beispielsweise regionalisierte Wettervorhersagen, fruchtartspezifische Prognosen und ähnliches. Das Wetterfax erlaubt es jedoch nicht, die empfangenen Informationen in technischen Hilfsmitteln, die in dem landwirtschaftlichen oder landtechnischen Betrieb des Empfängers vorhanden sind, wie beispielsweise Computerterminals, automatisiert weiterzuverarbeiten. Vielmehr müßten, um eine Datenbasis für eine automatisierte Weiterverarbeitung zu schaffen, eine Vielzahl einzelner Daten - soweit sie überhaupt per Fax in der Menge faßbar und lesbar übertragen werden können, diese per Fax übermittelten Daten manuell über eine Tastatur in einen Datenspeicher gegeben werden, bevor sie für eine Weiterverarbeitung zugänglich sind. Da der Aufwand dazu viel zu hoch ist und zudem Eingabefehler auftauchen können, beschränken sich die Informationen des Wetterfaxes auf einige wenige Kenngrößen, die zu unpräzise sind, um für eine automatisierte Weiterverarbeitung mit hohen Nutzpotential genutzt werden zu könne. Mit den für Wetterinformationen aus dem Stand der Technik bekannten Informationsübermittlungstechniken ist es nicht möglich, eine größere Menge von Daten zu übertragen, die von auf landwirtschaftlichen Betrieben vorhandenen automatisierten Auswertungstechniken weiterverarbeitet werden können.

Es ist deshalb die Aufgabe der vorliegenden Erfindung, ein Verfahren zur Bereitstellung von agrarmeteorologischen Informationen zu finden, bei dem die agrarmeteorologischen Informationen in vorhandenen Betriebseinrichtungen auf einfache Weise bereitgestellt und automatisiert weiterverarbeitbar sind.

Die erfindungsgemäße Aufgabe wird gelöst, indem sich der Empfänger der agrarmeteorologischen Informationen mit einem Computerterminal unter Verwendung einer Datenübertragungssoftware über an das Computerterminal angeschlossene Telekommunikationsmittel in einen ebenfalls daran angeschlossenen Server einwählt, der Server für den Empfänger bestimmte Dateien, die agrarmeteorologische Informationen enthalten, zur Datenübertragung bereitstellt, die Dateien über Telekommunikationsmittel unter Verwendung einer Datenübertragungssoftware auf das Computerterminal des Empfängers überträgt und diese dann dort für folgende Bearbeitungen zur Verfügung stehen. Der Vorteil des vorgeschlagenen Verfahrens besteht darin, daß die auf das Computerterminal des Empfängers übermittelten agrarmeteorologischen Informationen direkt für automatisierte Bearbeitungen genutzt werden können. So können die Wetterdaten beispielsweise von einer Maschineneinsatzplanungssoftware eingelesen und als Basisdaten für einen Vorschlag für einen Maschineneinsatzplan weiterverarbeitet werden. Die Wetterdaten können auch dazu genutzt werden, um auf dem Computerterminal des Empfängers automatisierte teilflächenspezifische Anweisungen für einen Düngerstreuer oder die positionsgenaue Dosierung von Pflanzenschutzmitteln zu erstellen. Durch die online-Bereitstellung entfällt die sonst erforderliche mühsame manuelle Eingabe der Wetterdaten. Zudem entfällt durch die online-Bereitstellung eine mögliche Fehlerquelle, wenn eine Vielzahl von Zahlen und Daten manuell in ein Computerterminal eingegeben werden müssen.

Bevorzugt werden die zu übertragenden Dateien vom Server komprimiert bereitgestellt, übermittelt und im Computerterminal des Empfängers dekomprimiert, um die Dauer der Datenübermittlung möglichst kurz zu halten. Die vom Server bereitgestellten Daten können zumindest teilweise empfängerspezifische Informationen enthalten. Dabei können die empfängerspezifischen Informationen durch den Abgleich der bereitzustellenden Daten mit empfängerspezifischen Kenndaten ausgelöst werden, die entweder im Server abgelegt sind oder die von der Datenübertragungssoftware des Empfängers bei der Einwahl in den Server mitübermittelt und dadurch im Server bereitgestellt werden. Als empfängerspezifische Kenndaten kommen beispielsweise geographische Koordinaten, auf die sich die agrarmeteorologischen Informationen beziehen sollen, boden- oder fruchtartspezifische Informationen oder ähnliche Kenndaten in Betracht. Der Server kann die für den Empfänger bestimmten Informationen in einer Mailbox bereitstellen.

Um die vom ersten Server verteilten agrarmeteorologischen Informationen zu bekommen, werden die dem ersten Server zur Verfügung stehenden agrarmeteorologischen Informationen bevorzugt von einem zweiten Server über Telekommunikationsmittel und eine Datenübertragungssoftware übermittelt. Bei einer solchen Konfiguration besteht eine Arbeitsteilung: während der erste Server hauptsächlich die empfängerspezifische Distribution der agrarmeteorologischen Informationen bearbeitet, erstellt der zweite Server die für die agrarmeteorologischen Informationen erforderlichen Prognosedaten. Für die Erstellung der Prognosedaten kommuniziert der zweite Server seinerseits mit weiteren Computerterminals, beispielsweise regionalen Meß- und Auswertestationen. Die vorgeschlagene Arbeitsteilung ist vorteilhaft, da dadurch die Kommunikation der Server mit den jeweils angeschlossenen Computerterminals auf die jeweilige aufgabenspezifische Kommunikation beschränkt ist und die Kapazität eines ersten Servers nicht für die Abarbeitung der Doppelfunktion ausgelegt werden muß.

Die vom ersten Server übermittelten agrarmeteorologischen Informationen können vom Computerterminal des Empfängers mit einer geeigneten Software in einer Datenbank abgelegt und dort für die Weiterverarbeitung bereitgehalten werden. Dadurch wird der Zugriff von verschiedener Weiterverarbeitungssoftware auf die übermittelten Daten vereinfacht. So kann beispielsweise die Maschinendispositionssoftware in gleicher Weise auf die Daten zugreifen wie die Software zur Erstellung einer teilflächenspezifischen Anweisung zur Ausbringung von Pflanzenschutzmitteln. Die an den Empfänger übermittelten Daten können direkt oder nach Aufruf aus der Datenbank auf dem Computerterminal des Empfängers mittels Graphiken, Tabellen oder Textinformationen über Ausgabemedien wie Bildschirme, Drucker, etc. angezeigt werden. Auch können die an den Empfänger übermittelten Daten mit weiteren, im Computerterminal des Empfängers vorhandenen Daten verknüpft und das Ergebnis der Verknüpfung mittels Graphiken, Tabellen oder Textinformationen über Ausgabemedien angezeigt werden. So können die agrarmeteorologischen Informationen mit der aktuellen Maschinendisposition abgeglichen und Folgerungen aus dem Abgleich, wie beispielsweise längere oder kürzere Bearbeitungszeiten eines Feldes, Unterbrechungen durch Niederschlag, späterer Arbeitsbeginn etc. angezeigt oder Abweichungen der Düngeplanung, die aus den aktuellen Wetterdaten resultieren, auf den Ausgabemedien angezeigt werden.

Der erste Server kann nach Einwahl des Empfängers in den ersten Server über Telekommunikationsmittel unter Verwendung von Datenübertragungssoftware und Anforderung von Daten, die nicht im ersten Server vorhanden sind, durch eine geeignete Steuerungssoftware dazu veranlaßt werden, die fehlenden Daten von einem zweiten Server abzufragen und diese Daten dem Empfänger nach Erhalt zur Datenübermittlung bereitzustellen. Es solches Vorgehen kann sinnvoll sein, wenn vom Empfänger spezielle Radarbildauswertungen zur Bewegung von Unwettern beim ersten Server abgefragt werden, die nicht ständig als Datei vorgehalten werden, weil eine solche Auskunft nur eher seltener abgefragt wird. Es kann vorteilhaft sein, wenn die Kommunikation zwischen Server und Empfänger von der Kommunikationssoftware des ersten Servers und/oder des Empfängers unterbrochen und je nach Wahl auch selbst wieder aufgebaut werden kann, beispielsweise, wenn Rückfragen an zweite Server erforderlich sind oder Dateien abgefragt werden, deren Zusammenstellung länger dauern könnte. Unter bestimmten Voraussetzungen sollte die Kommunikationssoftware des Servers auch selbsttätig eine Verbindung zum Computerterminal eines oder mehrerer Empfänger aufbauen, beispielsweise, wenn der erste Server selbständig vor Unwettem warnt. Da evtl. das Computerterminal des Empfängers nicht immer eingeschaltet und empfangsbereit ist, könnte es vorteilhaft sein, neben dem Computerterminal noch ein Fax beim Empfänger vorzuhalten, über das der erste Server agrarmeteorologische Informationen oder Warnmeldungen an den Empfänger senden kann.

Im folgenden wird die Erfindung anhand eines Ausführungsbeispiels beschrieben. Es zeigt:

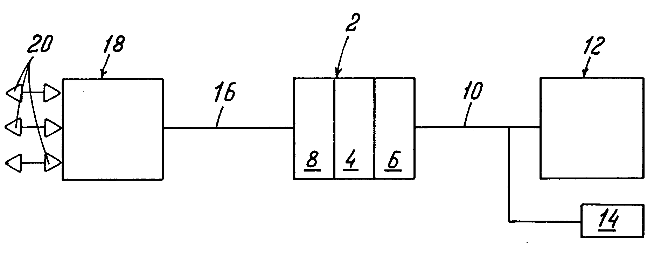

- Figur 1: eine schematische Darstellung des Aufbaus einer Kommunikationseinheit zwischen erstem Server, einem Empfänger-Computerterminal und einem zweiten Server,

In Figur 1 ist ein Server 2 dargestellt, der im einzelnen aus einem Dispatcher 4, einer Mailbox 6 und einem Router 8 besteht. Die Kommunikation zwischen den Rechnern der Mailbox 6, dem Router 8 und dem Dispatcher 4 des Servers 2 erfolgt über TCP/IP. Der Server 2 ist über die Mailbox 8 über eine Telekommunikationsverbindung 10, beispielsweise einem ISDN- oder Analog-Kabel, mit dem Computerterminal 12 des Empfängers verbunden. Server 2 und Computerterminal 12 sind mit einer Datenübertragungssoftware ausgestattet. Beim Empfänger kann an die Telekommunikationsverbindung 10 zusätzlich ein Faxgerät 14 angeschlossen sein. Im Server 2 sind die agrarmeteorologischen Informationen in Form von Daten und Dateien abgelegt. Wählt sich der Empfänger im Abfragemodus in den Server 2 ein, so werden entweder bereits fertig zusammengestellte Daten freigegeben oder mittels eines Dispatch-Softwareprogramms die angefragten Daten zusammengestellt und nach Ende des Dispatchvorganges werden die Daten per File Transfer Protocol FTP in das Mailboxsystem 6 übertragen. Neben dem FTP sind auch andere Verfahren, die Laufwerke anderer Rechner unmittelbar zur Verfügung stellen, wie beispielsweise NFS, möglich.

Um die vorhandenen agrarmeteorologischen Informationen aktualisieren zu können, ist der Server 2 mit seinem Router 8 über eine Telekommunikationsverbindung 16 mit einem zweiten Server 18 verbunden. Der Server 18 bereitet anhand einer geeigneten Software die ihm über weitere Telekommunikationsverbindungen 20 von weiteren Computerterminals von Meß- und Auswertestationen übermittelten Meßwerte und Wetterdaten zu einer aktualisierten Prognose auf und übermittelt die aktualisierte Prognose automatisch, manuell ausgelöst oder auf Anfrage durch den Server 2 über die Telekommunikationsverbindung 16 auf den Server 2. Die vom Server 18 übermittelten Dateien und Daten werden in den Dispatcher 4 eingelesen und von einer Dispatch-Software in Empfänger bzw. standortspezifische Dateien aufgearbeitet, um dann für den erneuten Abruf durch den Empfänger bereit zu sein. Bei Warnmeldungen wird entsprechend verfahren, nur mit dem Unterschied, daß der Server 2 solche Warnmeldungen direkt ohne auf eine Anfrage durch den Empfänger zu warten, an den Empfänger übermittelt.

## Patentansprüche

1. Verfahren zur Bereitstellung von agrarmeteorologischen Informationen,
**dadurch gekennzeichnet,**
daß sich der Empfänger der agrarmeteorologischen Informationen mit einem Computerterminal unter Verwendung einer Datenübertragungssoftware über an das Computerterminal angeschlossene Telekommunikationsmittel in einen ebenfalls daran angeschlossenen ersten Server einwählt, der erste Server für den Empfänger bestimmte Dateien, die agrarmeteorologische Informationen enthalten, zur Datenübertragung bereitstellt, die Dateien oder Daten über Telekommunikationsmittel unter Verwendung einer Datenübertragungssoftware auf das Computerterminal des Empfängers übertragen und dise dann dort für folgende Bearbeitungen zur Verfügung stehen.

2. Verfahren nach Anspruch 1,
**dadurch gekennzeichnet,**
daß die zu übertragenden Dateien vom ersten Server komprimiert bereitgestellt, übermittelt und im Computerterminal des Empfängers dekomprimiert werden.

3. Verfahren nach Anspruch 1 oder 2,
**dadurch gekennzeichnet,**
daß die vom ersten Server für den Kunden bereitgestellten Daten zumindest teilweise empfängerspezifische Informationen enthalten.

4. Verfahren nach einem oder mehreren der Ansprüche 1 bis 3,
**dadurch gekennzeichnet,**
daß der erste Server die für den Empfänger bestimmten Informationen in einer Mailbox bereitstellt.

5. Verfahren nach einem oder mehreren der Ansprüche 1 bis 4,
**dadurch gekennzeichnet,**
daß der erste Server die ihm zur Verfügung stehenden agrarmeteorologischen Informationen über Telekommunikationsmittel und eine Datenübertragungssoftware von einem zweiten Server übermittelt bekommt.

6. Verfahren nach einem oder mehreren der Ansprüche 1 bis 5,
**dadurch gekennzeichnet,**
daß die an den Empfänger übermittelten Daten von einer Software in einer Datenbank abgelegt und dort für die Weiterverarbeitung bereitgehalten sind.

7. Verfahren nach einem oder mehreren der Ansprüche 1 bis 6,
**dadurch gekennzeichnet,**
daß die an den Empfänger übermittelten Daten auf dem Computerterminal des Empfängers mittels Graphiken, Tabellen oder Textinformationen über Ausgabemedien angezeigt sind.

8. Verfahren nach einem oder mehreren der Ansprüche 1 bis 7,
**dadurch gekennzeichnet,**
daß die an den Empfänger übermittelten Daten mit weiteren, im Computerterminal des Empfängers vorhandenen Daten verknüpft und das Ergebnis der Verknüpfung mittels Graphiken, Tabellen oder Textinformationen über Ausgabemedien angezeigt ist.

9. Verfahren nach einem oder mehreren der Ansprüche 1 bis 8,
**dadurch gekennzeichnet,**
daß der erste Server nach Einwahl des Empfängers in den ersten Server über Telekommunikationsmittel unter Verwendung von Datenübertragungssoftware und Anforderung von Daten, die nicht im ersten Server vorhanden sind, durch eine geeignete Steuerungssoftware dazu veranlaßt wird, die fehlenden Daten von einem zweiten Server abzufragen und diese Daten nach Erhalt dem Empfänger zur Datenübermittlung bereitzustellen.

10. Verfahren nach einem oder mehreren der Ansprüche 1 bis 9,
**dadurch gekennzeichnet,**
daß die Kommunikation zwischen erstem Server und Empfänger von der Kommunikationssoftware des ersten Servers und/oder der des Empfängers unterbrochen und selbsttätig wieder aufgebaut werden kann.

11. Verfahren nach einem oder mehreren der Ansprüche 1 bis 10,
**dadurch gekennzeichnet,**
daß die Kommunikationssoftware des ersten Servers bei Vorliegen definierter Voraussetzungen selbsttätig eine Verbindung zum Computerterminal des Empfängers aufbaut.

12. Verfahren nach einem oder mehreren der Ansprüche 1 bis 11,
**dadurch gekennzeichnet,**
daß neben dem Empfänger-Computerterminal noch ein Fax beim Empfänger für die Kommunikation mit dem ersten Server bereitsteht.
